# EUROPÄISCHE PATENTSCHRIFT

(11) **EP 0 455 954 B1**
(45) Veröffentlichungstag und Bekanntmachung des Hinweises auf die Patenterteilung: **27.07.1994**
(21) Anmeldenummer: 91103658.0
(22) Anmeldetag: 11.03.1991
(51) Int. Cl.: F16C 33/60

(54) **Radial-Wälzlager**
Radial rolling bearing
Roulement radial

(30) Priorität: 10.05.1990 DE 9005328 U
(43) Veröffentlichungstag der Anmeldung: 13.11.1991
(73) Patentinhaber: INA Wälzlager Schaeffler KG, 91063 Herzogenaurach (DE)
(72) Erfinder: Diedrich, Michael, Dipl.-Ing., W-8522 Herzogenaurach (DE)

(56) Entgegenhaltungen:
- CH-A- 628 961
- DE-A- 3 305 820
- FR-A- 2 407 387
- GB-A- 718 781
- US-A- 3 004 808
- SAE JOURNAL, Band 78, Nr. 1, Januar 1970, Seite 101; "Tapered roller unit
- bearings eliminate need for adjustment"

## Beschreibung

Die Erfindung betrifft ein abgedichtetes Radial-Wälzlager, insbesondere zur Verwendung als Stütz- oder Kurvenrolle, bestehend aus konzentrisch ineinander angeordneten Laufringen mit einander gegenüberliegenden Laufbahnen, zwischen denen zylindrische Wälzkörper abrollen, wobei an wenigstens einem axialen Ende des Innenringes zur axialen Führung der Wälzkörper eine im Querschnitt winkelförmige Bordscheibe vorgesehen ist, deren axialer Schenkel unter radialer Vorspannung auf die Außenmantelfläche des Innenringes aufgesetzt ist und die mit einem Teil ihres Außenumfanges eine Gegenfläche für eine am Außenring angeordnete Dichtung bildet.

Ein derartiges abgedichtetes Radial-Wälzlager ist aus der CH-PS 628 961 bekannt. Die Bordscheiben sind hierbei in Nuten des Innenringes eingesetzt, wobei an der Anlagefläche zwischen Bordscheibe und Innenring zur Verbesserung der Dichtheit ein O-Ring vorgesehen ist.

Derartige Kurvenrollen erfüllen ihren Zweck durchaus, jedoch müssen sowohl die Nuten im Innenring als auch die Bordscheiben und die Wälzkörper sehr genau bearbeitet werden, da es ansonsten über die Borde zu axialen Klemmungen der Wälzkörper, bzw. zu großem Spiel der Wälzkörper kommen kann. Aufgrund der in den Innenring einzuarbeitenden, genauen Nuten ist ein solches Lager in der Herstellung teuer.

Die Aufgabe der Erfindung besteht darin, ein gattungsgemäßes Radial-Wälzlager so zu gestalten, daß das Anbringen der Bordscheiben an den Innenring vereinfacht ist und das Lager wirtschaftlich hergestellt werden kann.

Diese Aufgabe wird dadurch gelöst, daß der Innenring eine glattzylindrische Mantelfläche aufweist und daß der radiale Schenkel der Bordscheibe an der Stirnfläche des Innenringes anliegt.

Durch diese Ausgestaltung des Radial-Wälzlagers wird erreicht, daß der Innenring mit einer einfach herzustellenden glatten zylindrischen Außenmantelfläche ausgeführt werden kann, wobei am Innenring lediglich das Längenmaß eingehalten werden muß. Auf diesen Innenring können in einfacher Weise die winkelförmigen Bordscheiben aufgepreßt werden, ohne daß besondere Maßnahmen zur Kontrolle des axialen Maßes notwendig sind. Gegebenenfalls ist es möglich, den axialen Abstand zwischen den Bordscheiben, der maßgeblich ist für das axiale Spiel der zylindrischen Wälzkörper, z. B. durch Zusortierungen mit hoher Genauigkeit einzuhalten.

In einer bevorzugten Variante der Erfindung ist vorgesehen, im Knickpunkt des winkelförmigen Profils der Bordscheiben eine Schwachstelle in Form einer Wanddickenreduzierung anzuordnen, um die durch die erhöhte Steifigkeit des winkelförmigen profilsbedingte Gefahr von Einschnürungen des Innenringes infolge des Aufpressens der Bordscheibe auszuschließen.

Die Erfindung wird im folgenden anhand eines Ausführungsbeispieles erläutert.

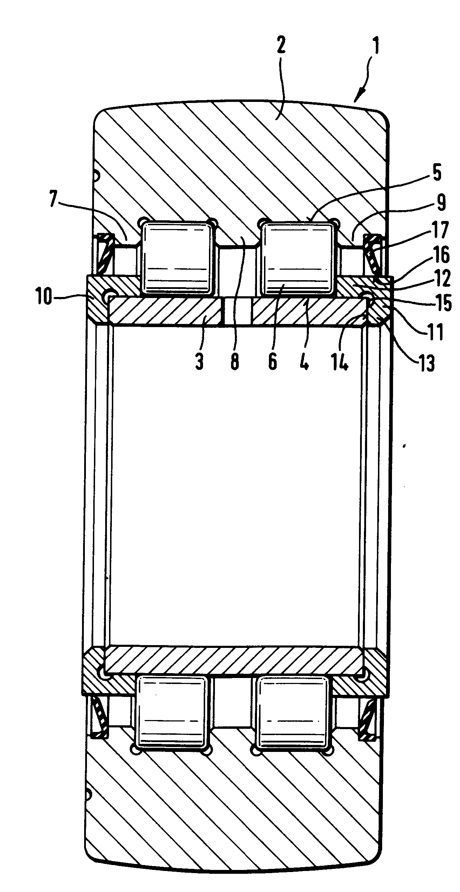

Die einzige Figur zeigt ein Radial-Wälzlager 1, welches in diesem Fall als Stützrolle eingesetzt werden kann. Das Radial-Wälzlager 1 besteht aus dem Außenring 2 und dem dazu konzentrisch angeordneten Innenring 3, die einander gegenüberliegende Laufbahnen 4, 5 aufweisen, zwischen denen zwei Reihen zylindrischer Wälzkörper 6 angeordnet sind. Die zylindrischen Wälzkörper 6 sind im Außenring durch die Borde 7, 8 und 9 axial geführt. Die axiale Führung der Wälzkörper 6 am Innenring 3 erfolgt durch die winkelförmigen Bordscheiben 10, 11 die jeweils seitlich am Innenring 3 angeordnet sind. Diese Bordscheiben werden mit ihrem axialen Schenkel 12 auf den Innenring 3 aufgepreßt, während der radiale Schenkel 13 an der Stirnfläche 14 des Innenringes 3 anliegt. Um zu vermeiden, daß durch die winkelbedingte erhöhte Steifigkeit der Bordscheiben 10, 11 der Innenring 3 eingeschnürt wird, sind im Bereich des Knickpunktes Schwächungen 15 der Bordscheiben 10, 11 in Form einer Wanddickenreduzierung vorgesehen.

Die Außenmantelfläche der Bordscheiben 10, 11 ist gleichzeitig als Gegenfläche 16 für die Dichtungen 17 ausgebildet. Durch die Zentrierung der Bordscheiben 10, 11 auf dem Innenring 3 ist es problemlos möglich, die Gegenfläche für die Dichtung am Innenring 3 auszurichten, so daß Unrundheiten, die zur Zerstörung der Dichtung 17 führen könnten, vermieden sind.

## Patentansprüche

1. Abgedichtetes Radial-Wälzlager, insbesondere zur Verwendung als Stütz- oder Kurvenrolle, bestehend aus konzentrisch ineinander angeordneten Laufringen (2, 3) mit einander gegenüberliegenden Laufbahnen (4, 5), zwischen denen zylindrische Wälzkörper (6) abrollen, wobei an wenigstens einem axialen Ende des Innenringes (3) zur axialen Führung der Wälzkörper (6) eine im Querschnitt winkelförmige Bordscheibe (10,11) vorgesehen ist, deren axialer Schenkel (12) unter radialer Vorspannung auf die Außenmantelfläche des Innenringes (3) aufgesetzt ist, und die mit einem Teil ihres Außenumfanges eine Gegenfläche (16) für eine am Außenring (2) angeordnete Dichtung (17) bildet, **dadurch gekennzeichnet**, daß der Innenring (3) eine glattzylindrische Außenmantelfläche aufweist und daß der radiale Schenkel (13) der Bordscheibe (10, 11) an der Stirnfläche (14) des Innenringes (3) anliegt.

2. Abgedichtetes Radial-Wälzlager nach Anspruch 1, **dadurch** **gekennzeichnet**, daß die Bordscheibe (10, 11) eine wanddickenreduzierte Schwachstelle im Knickpunkt des winkelförmigen Querschnitts aufweist.

## Claims

1. Sealed radial rolling bearing, in particular for use as a supporting or curved roller, consisting of races (2, 3) arranged concentrically one inside the other with mutually opposed raceways (4, 5) between which cylindrical rolling elements (6) roll, wherein at at least one axial end of the inner race (3) for axial guiding of the rolling elements (6) there is provided a flanged disc (10, 11) of angular cross-section of which the axial arm (12) is placed under radial pretension on the outer peripheral surface of the inner race (3) and which with part of its outer circumference forms a counter-surface (16) for a seal (17) arranged on the outer race (2), characterised in that the inner race (3) comprises a smooth cylindrical outer peripheral surface and in that the radial arm (13) of the flanged disc (10, 11) abuts against the end face (14) of the inner race (3).

2. Sealed radial rolling bearing according to claim 1, characterised in that the flanged disc (10, 11) comprises a weak point of reduced wall thickness at the inflection point of the angular cross-section.

## Revendications

1. Roulement radial étanché, en particulier pour l'utilisation comme galet de support ou de came, comprenant des bagues de roulement (2, 3) agencées concentriquement l'une dans l'autre et qui possèdent des pistes de roulement (4, 5) situées en vis-à-vis et entre lesquelles roulent des corps roulants cylindriques (6), roulement dans lequel il est prévu, pour le guidage axial des corps roulants (6), à au moins l'une des extrémités axiales de la bague interne (3), un disque à rebord (10, 11) à profil angulaire dont le bras axial (12) est posé sous précontrainte radiale sur la surface périphérique extérieure de la bague interne (3) et qui, par une partie de sa périphérie extérieure, forme une contre-surface (16) pour une garniture d'étanchéité (17) agencée sur la bague externe (2), caractérisé en ce que la bague interne (3) possède une surface périphérique extérieure cylindrique lisse et en ce que le bras radial (13) du disque à rebord (10, 11) s'appuie contre la face frontale (14) de la bague interne (3).

2. Roulement radial étanché selon la revendication 1, caractérisé en ce que, au point d'inflexion du profil angulaire, le disque à rebord (10, 11) comprend un point faible sous la forme d'une diminution de l'épaisseur de paroi.
